# EUROPEAN PATENT APPLICATION

(11) **EP 1 605 674 A1**
(43) Date of publication of application: **14.12.2005**
(21) Application number: 04013619.4
(22) Date of filing: 09.06.2004
(51) Int. Cl.: H04M 3/42, H04Q 7/38

(54) **Location based service profile management system, method and apparatus**

(71) Applicant: SIEMENS AKTIENGESELLSCHAFT, 80333 München (DE)
(72) Inventor: Kenameas, Michael, 104-43 Sepolia, Athen (GR)

(57) **Abstract**

Profile management is based on location of a subscriber terminal of a telecommunications network. Predetermined profiles for given locations of the subscriber terminal are provided, the profiles indicating subscriber features of a telephone service of the telecommunications network. The location of the subscriber terminal is obtained (110). A profile is determined from the predetermined profiles that is provided for the location of the subscriber terminal (112). The determined profile is loaded so that the subscriber terminal accesses the subscriber features indicated by the determined profile (114).

## Description

### Background

### Field of the Invention

The present invention relates to a location based profile management system, method & apparatus and, more particularly, to managing one or more profiles of a telephone subscriber based on a location of the subscriber, wireline or mobile user.

### Related information

Telephone-users may have many telephony accesses, fixed or mobile. Some users have "profiles" for a part or all of the accesses they control. The term 'profile' is defined here as a group of subscriber-features that is loaded in the telephone exchange, for a part or the whole of telephone-accesses a user owns. The profile controls several features for each access the user utilizes.

Until this time, however, it has not been possible to manage the profiles. With the present lay out, it is perhaps possible to manage profiles on a time dependent basis. This technique could, for example, change a user's profile dependent on a period of time that a change of the behavior of each access is likely. For example, the user's profile may be set during the day time for business services when it is likely the user will be at work and another profile for home use in the evenings.

The management handling of the above-mentioned subscriber-features is not flexible enough, because it is only time relevant. For example, the user may not be in the office on the weekends or on vacation. The Profile management handling can be improved if the current location of the user is considered for the automatic update of the profile simultaneously, in some or all the locations the user has accesses.

In addition to this, if the user should change location (e.g. returning from work to his home), then he/she will have to waste time and effort to select a new profile for the accesses he owns. What is needed is an automatic location-based profile Management is automatic that requires no effort or time from the user.

There are no solutions known at present. The only closest field, which is not really relevant, is that for routing calls. One such solution for a location-oriented call routing of an incoming call (in case this user has a mobile phone) is, for example, provided by patent US 6,320,534. However, this patent only applies to routing and speaks nothing to management of profiles.

### OBJECTS & SUMMARY OF THE INVENTION

An object of the present invention is to provide automatic location-based change of the profile of accesses in various locations.

Another object of the present invention is to eliminate a need for a separate implementation in order to determine the user's location.

Another object of the invention is to save time as well as effort for the user when the user changes location and the profiles of the user's accesses in one or more locations have to change.

A method and apparatus are provided for profile management based on location of a subscriber terminal of a telecommunications network. Predetermined profiles for given locations of the subscriber terminal are provided, the profiles indicating subscriber features of a telephone service of the telecommunications network. The location of the subscriber terminal is obtained. A profile is determined from the predetermined profiles that is provided for the location of the subscriber terminal. The determined profile is loaded so that the subscriber terminal accesses the subscriber features indicated by the determined profile.

### BRIEF DESCRIPTION OF THE DRAWINGS

The invention shall be described in relation to the following figure(s) in which at least one example illustrated.

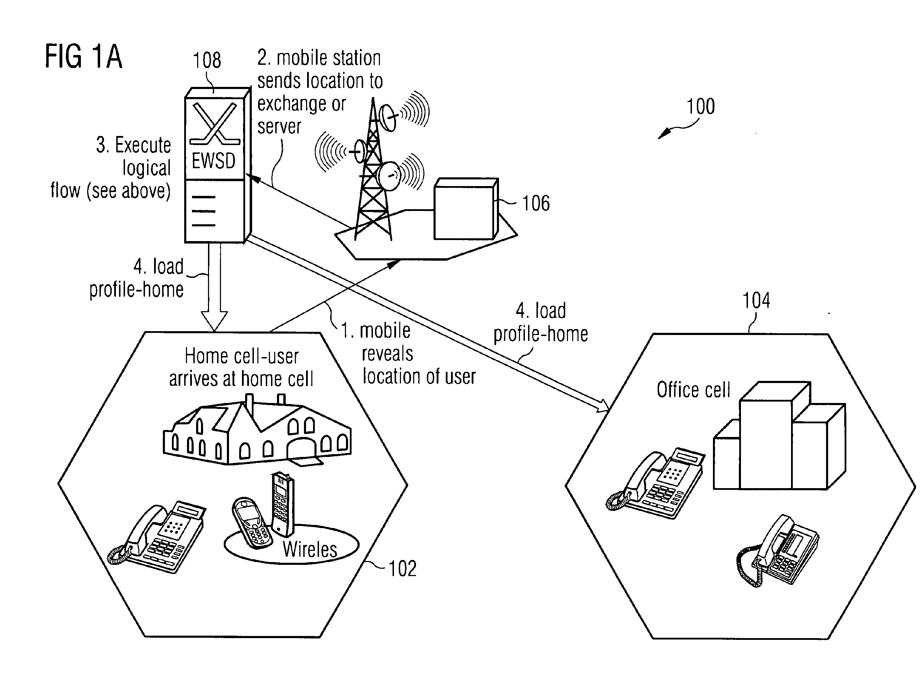

- Fig. 1A: illustrates the system of the present invention;

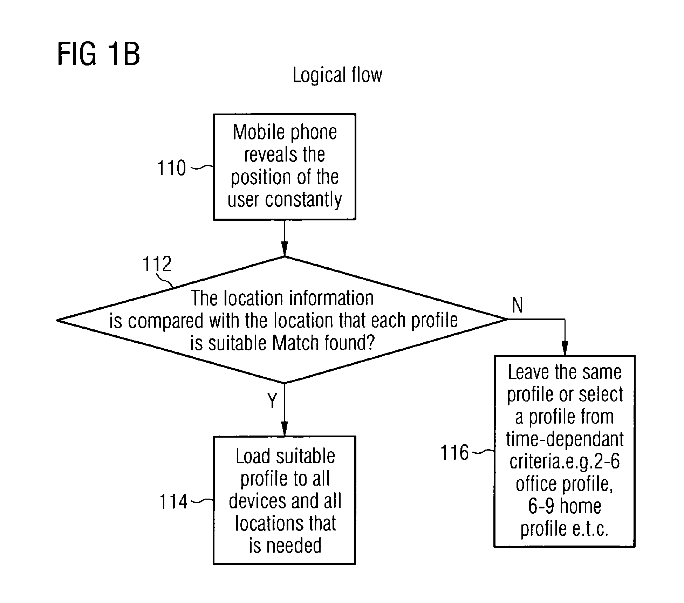

- and Fig. 1B: illustrates the process of the present invention.

### DETAILED DESCRIPTION OF THE PREFERRED EMBODIMENTS

There are a number of well-known techniques that are employed to determine the location of both fixed terminal, so-called wire-line, and mobile terminal users. We will briefly discuss these here since determination of the location of the terminal is known and not the principle subject of the invention. In any event, for thoroughness, the documents cited here are incorporated by reference.

According to federal regulation U.S. telephone network operators offering services for Public Answering Service Points must provide the ability to communicate the position of the calling party during an emergency call to the emergency authority, e.g. a police station. As long as the telephone set which a person in an emergency situation is calling from is connected to a wire based network, the telephone company operating the Public Answering Service Point already knows the fixed location of the calling party.

In a wireless telephone network, however, the location of the calling party is not known to the networking company at sufficient accuracy. From Oct. 1, 2001 on federal regulation in the U.S. will require an accuracy of the location in the range of less than 125 meters using a root mean square methodology.

In one known technique for mobile telephone location, the distance between a mobile telephone and a mobile telephone system antenna in a cell site can be determined by analyzing the signal strength of a communication signal between the cell site antenna and the mobile telephone. If the distance between the mobile telephone and a number of cell site antennas is calculated, the approximate location of the mobile telephone can be determined by a geometric process such as triangulation.

In U.S. Pat. No. 5,873,040 a wireless 911 emergency location system is disclosed where several mobile switching offices share a common database. In order to locate the caller the signal strength is measured at the base station communicating with the calling cellular phone. The measured value is passed with the switching offices to the shared computer to calculate the search area. A detailed mapping of the calculated area is provided to the emergency assistance center.

Global Positioning Satellites systems (GPS) are now being introduced into cell phones to determine the location of the cell phone. European patent application no. EP-A1-0,897,119 teaches a cellular transmitter for automatically providing position location and emergency. The mobile telephone set comprises a GPS positioning device to provide the coordinates of the caller. A stored telephone number is transmitted to the switching office together with the position data.

There are also a whole host of other known methods. In another system for communicating the position of a mobile object, a cellular transceiver is disclosed. The position data is transformed into one or more of a multitude of assigned telephone numbers. The telephone numbers represent the location information to be transmitted to a switch using the "callback" or "direct Inward dialing (DID)" service. The transmission of each DID is accomplished during the handshake when the calling telephone set is setting up the communication link to the switch as long as the connection is not yet fully established, which means that the switch is still "on hook".

The proposed solution of the present invention, which will now be discussed with reference to Figures 1A and 1B, is a location oriented profile management. The solution provides an automatic update of the user's profile, in accesses that reside in various locations, according to the specific location of the user.

For the document 2004P02247.

Fig. 1A shows a home cell 102 where the user arrives at home, or any other fixed station, and accesses his or her telephone services through a wireline or wireless line, such as a cell phone or a wireless phone. An office cell 104 is shown where the user may employ telephone services through office business phones, wireline or wireless. In mobile station 106 since the location information to either and exchange or network server 108. As already mentioned, the location of the subscriber terminal is determined in decoding to known processes. The exchange or network server may be, for example, Siemens EWSD (electronic worldwide switch device).

Now with respect to Fig. 1B, the location (the cell where the mobile phone is at a given time) will be indicated by the user's mobile cell-phone as indicated by step 110. The mobile networks support this function for other tasks e.g. network management control, handover etc., through one of the location features already described. Moreover the location is revealed constantly to the mobile network by the mobile phone. The location of the user is stored and updated constantly in a specific network element e.g. at a mobile exchange e.t.c. and it is transported to the exchange or to the network server at which the served user has registered his/her profiles.

Then, a position-based query is performed in step 112 in order to find the appropriate profile which must be "loaded" at the given time. This is based on the served user's current location, for example.

The appropriate predefined profile of the user is selected among the profiles which the user has already created in step 114, and the respective features which are contained at this profile will be activated/ deactivated/ modified for each access of the user it is necessary to do so. In case the profile is not suitable for the location, step 116 provides that the same profile already existing is maintained as the profile.

A possible enhancement of this invention could be the interaction of this implementation with the time based system afore-mentioned. This means that on top of a location oriented profile management, a time dependent one could also be applied.

The inventive step is that for the first time an automatic location oriented profile management is introduced for a user's accesses that reside in various locations. Any change of the profile in one or more locations of the accesses is performed according to the current location of the user, without any effort from the user side (time-effort saving/more user friendly option). Furthermore the proposed implementation is not a sophisticated or an expensive one, since the location determination is a process already existing in mobile telephony. It must also be underlined at this point that location oriented services are at these days very attractive for both operators and customers.

In operation, a user returns from his/her work to his/her home. This user desires to have a specific profile loaded for his/her accesses that reside in one or more locations, since he/she is in a specific location. If this user has active a location oriented profile management, the network will perform the profile change automatically as soon as the signal from his mobile reveals the current location of this user. The location is compared in the telephone exchange or network server for a suitable location-related pre-defined profile. If a match is found then the pre-defined profile is loaded to the accesses at all locations.

Should the user need to return unexpectedly for an urgent reason to his/her office, the profile would be automatically changed. If this user had a time depended profile management, the currently active profile would be changed after a scheduled time was reached (not desired) or the profile should be changed by the user himself (time-effort consuming). But if this user uses the proposed location-based profile management, this would have been done automatically (no effort, quicker).

The proposed solution thus provides automatic location-based change of the profile of accesses in various locations. With the invention, there is no need for a separate implementation in order to determine the user's location. It will also be appreciated, that the invention provides a time-saving as well as effort-saving for the user when the user changes location and the profiles of the user's accesses in one or more locations have to change.

## Claims

1. A method for profile management based on location of a subscriber terminal of a telecommunications network, comprising the steps of:
providing predetermined profiles for given locations of the subscriber terminal, the profiles indicating subscriber features of a telephone service of the telecommunications network;
obtaining the location of the subscriber terminal;
determining a profile from the predetermined profiles that is provided for the location of the subscriber terminal; and
loading the determined profile so that the subscriber terminal accesses the subscriber features indicated by the determined profile.

2. The method of claim 1, wherein the subscriber terminal is a mobile telephone and further comprising the step of storing the location of the subscriber at a mobile exchange.

3. The method of claim 1, further comprising the step of transferring the location to an exchange.

4. The method of claim 1, further comprising the step of transferring the location to a network server.

5. An apparatus for profile management based on location of a subscriber terminal of a telecommunications network, wherein a location of the subscriber terminal is known, comprising:
predetermined profiles for given locations of the subscriber terminal, the profiles indicating subscriber features of a telephone service of the telecommunications network;
an exchange / network server for determining a profile from the predetermined profiles that is provided for the location of the subscriber terminal; and
wherein the exchange / network server loads the determined profile so that the subscriber terminal accesses the subscriber features indicated by the determined profile.

6. The apparatus of claim 5, wherein the subscriber terminal is a mobile telephone.

7. The apparatus of claim 5, further comprising a mobile station that stores the location of the subscriber terminal.

8. The apparatus of claim 5, wherein the exchange / network server is an EWSD.
